# EUROPÄISCHE PATENTSCHRIFT

(11) **EP 0 845 618 B1**
(45) Veröffentlichungstag und Bekanntmachung des Hinweises auf die Patenterteilung: **14.05.2003**
(21) Anmeldenummer: 97116446.2
(22) Anmeldetag: 22.09.1997
(51) Int. Cl.: F16H 3/72, F16H 37/08

(54) **Kontinuierlich verstellbares Stufenwechselgetriebe**
Contiuously-variable multi-speed transmission
Transmission à rapports étagés avec variation continue

(30) Priorität: 30.11.1996 DE 19649744
(43) Veröffentlichungstag der Anmeldung: 03.06.1998
(73) Patentinhaber: Volkswagen Aktiengesellschaft, 38436 Wolfsburg (DE)
(72) Erfinder: Schneider, Arthur, 38112 Braunschweig (DE)

(56) Entgegenhaltungen:
- WO-A-94/10480
- DE-A- 1 804 533
- DE-A- 1 941 445
- US-A- 5 259 260
- US-A- 5 337 848

## Beschreibung

Die Erfindung betrifft eine Getriebeanordnung, insbesondere für ein Kraftfahrzeug, mit einem Zahnräderwechselgetriebe und wenigstens zwei Getriebeeingangswellen, denen unterschiedliche Gangstufen zugeordnet sind, sowie ein Verfahren zur Steuerung einer derartigen Getriebeanordnung.

Aus der DE-OS-18 04 533 ist es beispielsweise bekannt, an einer Nebenwelle des Zahnräderwechselgetriebes einen Triebsatz, wie beispielsweise einen Hydromotor, vorzusehen, der aktiv für eine Drehzahlsynchronisation von Nebenwelle und in Eingriff zu bringende Getriebeteile sorgt.

Aus der DE-C3-19 41 445 ist es bekannt, einen Elektromotor und eine Reibkupplung an einer Vorgelegewelle vorzusehen. Der Motor beschleunigt die Vorgelegewelle und die Reibkupplung bremst die Vorgelegewelle, so daß für ein reibungsloses Einlegen eines Ganges Gleichlauf im Getriebe erzeugt ist.

Beide Vorrichtungen haben den Nachteil, daß beim Gangwechsel der Zugkraftverlauf diskontinuierlich verläuft.

Der vorliegenden Erfindung liegt daher die Aufgabe zugrunde, eine Getriebeanordnung und ein Verfahren der obengenannten Art zur Verfügung zu stellen, mit der ein Stufenwechselgetriebe zu einem Automatikgetriebe mit hohem Schaltkomfort ausbildbar und betreibbar ist.

Diese Aufgabe wird erfindungsgemäß durch eine Getriebeanordnung mit den in Anspruch 1 gekennzeichneten Merkmalen gelöst, während das Verfahren in Anspruch 7 beansprucht wird.

Dazu ist erfindungsgemäß vorgesehen, daß die wenigstens zwei Getriebeeingangswellen mit einem Zusatzantrieb verbunden sind. Dies hat den Vorteil, daß der Zusatzantrieb die Aufgabe von Synchronisiermittel übernimmt, einen Generator, einen Anlasser, Mittel zur Ermöglichung eines Motorbremsbetriebes und eine Anfahrkupplung ersetzt sowie eine gleitende, d.h. eine kontinuierliche Einstellung der Übersetzung bzw. der Drehmomentübertragung ermöglicht.

Zur Erhöhung der Flexibilität der Getriebeanordnung bezüglich unterschiedlichster wechselnder Betriebsbedingungen ist in vorteilhafter Weise ein Antriebsmotor über Schaltmuffen einer Schaltkupplung mit einer oder beiden Getriebeeingangswellen wahlweise verbindbar.

Zusätzlich sind Momentenüberhöhungen dadurch erzielbar, daß die wenigstens zwei Getriebeeingangswellen über ein Planetengetriebe mit dem Zusatzantrieb verbunden sind.

Je nach Einsatzzweck und Betriebserfordernissen ist der Zusatzantrieb ein Elektro- oder ein Hydromotor. Der Elektromotor kann in Bremsphasen in vorteilhafter Weise als Generator und der Hydromotor entsprechend als Hydropumpe verwendet werden, so daß kinetische Energie nicht einfach zu Wärme vernichtet wird, sondern für weitere Funktionen im System zur Verfügung steht.

Einen kontinuierlichen Schaltvorgang erzielt man zusätzlich dadurch, daß einer Getriebeeingangswelle die geraden und der anderen Getriebeeingangswelle die ungeraden Gangstufen zugeordnet sind.

Einen automatisierten Betrieb erzielt man dadurch, daß an den Getriebeeingangswellen und einer Vorgelegewelle Mittel zur Bestimmung einer Drehzahl oder Differenzdrehzahl angeordnet sind, welche entsprechende Signale an eine Steuereinrichtung geben.

Bei einem erfindungsgemäßen Verfahren der o.g. Art sind erfindungsgemäß folgende Schritte vorgesehen:
(a) Erhöhen des Momentes des Zusatzantriebes in einen motorischen Betrieb, bis ein Moment an der zweiten Getriebeeingangswelle antriebsseitig zu Null oder negativ wird und eine antriebsseitige Verbindung der zweiten Getriebeeingangswelle freilaufbedingt öffnet,
(b) Beaufschlagen der zweiten Getriebeeingangswelle mit einem Moment mittels des Zusatzantriebs, wobei die Drehzahl der zweiten Getriebeeingangswelle so lange verändert wird, bis an einer Schaltmuffe der zweiten Gangstufe Synchronlauf hergestellt wird,
(c) Einlegen der zweiten Gangstufe,
(d) Antreiben bzw. Abbremsen mittels des Zusatzantriebes, bis an einer Schaltmuffe der ersten Gangstufe das Moment zu Null oder negativ wird und diese Schaltmuffe freilaufbedingt öffnet,
(e) Erhöhen bzw. Erniedrigen des Momentes des Zusatzantriebes, bis ein Wert erreicht ist, bei dem ein kontinuierlicher Zugkraftverlauf möglich ist,
(f) Herstellen einer antriebsseitigen Verbindung der zweiten Getriebeeingangswelle, wenn eine Drehzahldifferenz an dieser Verbindung einen vorbestimmten Schwellwert unterschreitet.

Dies hat den Vorteil, daß eine kontinuierliche Einstellung der Übersetzung bzw. der Drehmomentübertragung möglich ist.

Das Absenken des Momentes des Zusatzantriebes, bis der Zusatzantrieb generatorisch zum Laden einer Batterie wirkt, erlaubt in vorteilhafter Weise, den Zusatzantrieb zusätzlich anstelle eines Generators zu betreiben, so daß ein weiteres Bauteil eingespart ist.

Eine kontinuierliche Einstellung der Übersetzung wird dadurch erzielt, daß zwischen den Schritten (c) und (d) der Zusatzantrieb derart gesteuert wird, daß sich ein Antriebsmoment ergibt, welches zwischen den Werten der beteiligten Gangstufen liegt.

Weitere Merkmale, Vorteile und vorteilhafte Ausgestaltungen der Erfindung ergeben sich aus den abhängigen Ansprüchen, sowie aus der nachstehenden Beschreibung der Erfindung an Hand der beigefügten Zeichnungen. Diese zeigen in:
- Fig. 1: eine schematische Darstellung einer bevorzugten Ausführungsform einer erfindungsgemäßen Getriebeanordnung und
- Fig. 2: ein Ersatzschaltbild der Getriebeanordnung von Figur 1.

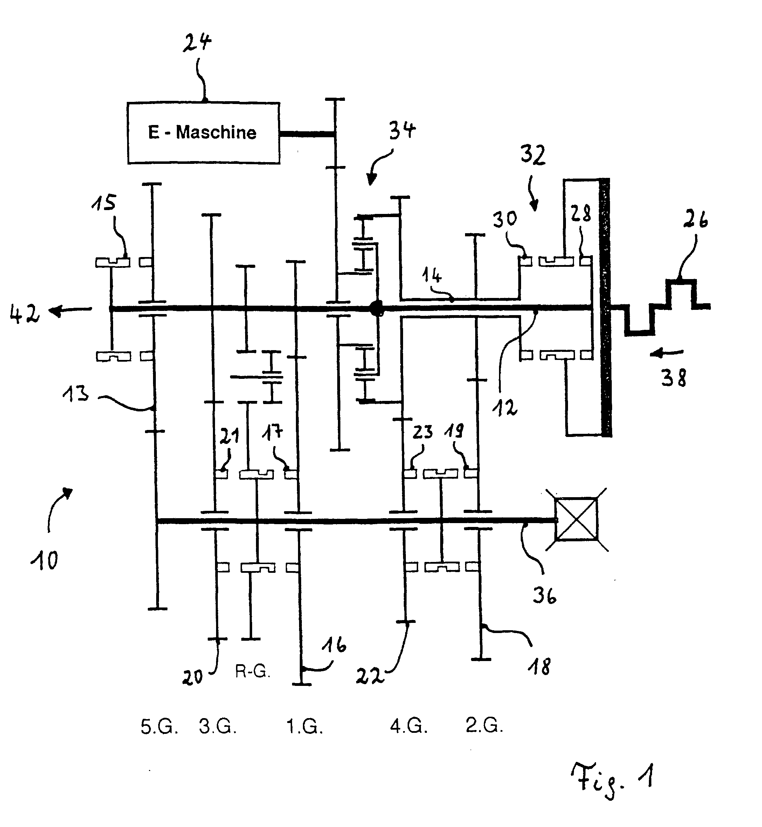

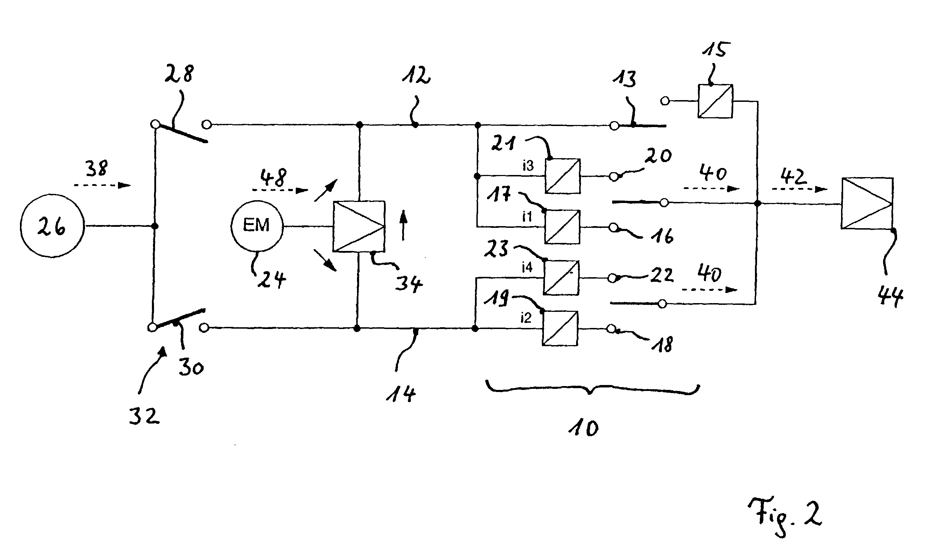

Unter Bezugnahme auf Figuren 1 und 2 wird nachfolgend der Aufbau und die Funktion einer erfindungsgemäßen Getriebeanordnung am Beispiel einer dargestellten bevorzugten Ausführungsform beschrieben.

Ein Zahnradwechselgetriebe 10 weist zwei Getriebeeingangswellen 12 und 14 und mehrere Gangstufen 13, 16, 18, 20 und 22 mit jeweiligen Schaltmuffen 15, 17, 19, 21 und 23 auf. Antriebsseitig sind die Getriebeeingangswellen 12 und 14 über eine Schaltkupplung 32 mit Schaltmuffen 28 und 30 wahlweise mit einem Antriebsmotor 26 verbunden. Über ein Planetengetriebe 34 sind die Getriebeeingangswellen 12 und 14 mit einem Zusatzantrieb 24, wie beispielsweise einem Elektromotor oder einem Hydromotor, verbunden.

Die Getriebeeingangswelle ist somit in 2 Teilwellen 12 und 14 für gerade und ungerade Gangstufen 16, 18, 20 und 22 aufgeteilt. Über die Schaltkupplung 32 ist jeweils eine der Wellen mit dem Motor 26 verbunden. Über das Planetengetriebe 34 stehen beide Teilwellen 12 und 14 mit dem Zusatzantrieb 24 in Verbindung. Ein Zusatzantrieb 24 in Form einer Elektromaschine, die vorzugsweise für einen 2- oder 4-Quadrantenbetrieb geeignet ist, übernimmt die zentrale Synchronisation und ersetzt einen Generator, einen Anlasser und eine Anfahrkupplung mit Momentenerhöhung. Die Betätigung des Getriebes 10 erfolgt wie bei einem bekannten Lastschaltgetriebe.

Die beiden Teilwellen 12 und 14 mit den jeweils zugeordneten Gangstufen 16, 18, 20 und 22 sind über den gesonderten Antrieb 24, 34 miteinander verbunden. Mittels des so einleitbaren Momentes sind Zugkräfte und Drehmomente darstellbar, deren Werte zwischen den Werten der beteiligten Gangstufen liegen. Wird der Zusatzantrieb 24 über das Planetengetriebe 34 mit den beiden Wellen 12 und 14 verbunden, so sind auch Momentenerhöhungen erzielbar, beispielsweise zum Anfahren oder zur kurzzeitigen Leistungssteigerung ("Kickdown").

Dies führt zu einem gleitenden Gangwechsel mit kontinuierlichem Zugkraftverlauf. Auch im Zugbetrieb sind zugkraftunterbrechungsfreie Vollastrückschaltungen möglich. Durch motorische oder generatorische Einbeziehung des Zusatzantriebes 24 ist eine kontinuierliche Einstellung der Übersetzung, d.h. ein Fahrbetrieb zwischen den Gangstufen möglich. Mit entsprechend höheren Leistungsdaten des Zusatzantriebes, wie einem Elektroantrieb, sind ferner Hybridantriebe darstellbar.

Nachfolgend soll der Funktionsablauf am Beispiel einer Schaltung vom dritten Gang 20 in den vierten Gang 22 beispielhaft beschrieben werden. Es versteht sich, daß sich gewisse Abläufe, wie Drehzahlerhöhungen und -verringerungen gerade umkehren, wenn von einem höheren Gang in einen niedrigeren Gang geschaltet werden soll.

In der Ausgangssituation fährt ein Fahrzeug im dritten Gang 20. Die Schaltmuffe 28 zwischen einem Schwungrad 46 und der ersten Getriebeeingangswelle 12 dem mit erstem, drittem und fünftem Gang 16, 20, 13 ist geschlossen.

Bei gleichzeitig geschlossener Schaltmuffe 30 der zweiten Getriebeeingangswelle 14 mit zweitem und viertem Gang 18, 22 wirkt die Elektromaschine 24 als Generator zum Batterieladen.

Als nächstes wird der Schaltvorgang zum Einlegen eines neuen Ganges eingeleitet:

Nach Erreichen einer Schaltbedingung, z.B. Motordrehzahl größer als 1500 U/min, wird das Moment 48 des Elektromotors über eine vorbestimmte Rampe ansteigend in den motorischen Betrieb gesteuert, bis das Moment über der Schaltmuffe 30 negativ wird und die Schaltmuffe 30 freilaufbedingt öffnet.

Danach wird mit kleinem Moment 48 die Drehzahl der zweiten Welle 14 auf Gleichlauf über der Schaltmuffe 23 des vierten Ganges 22 geregelt. Bei erreichen des Synchronlaufes wird der vierte Gang 22 eingelegt.

Nun wird die Motordrehzahl angepaßt und der alte Gang gelöst:

Nach Einlegen des vierten Ganges 22 wird das Moment 48 über eine vorbestimmte Rampe ansteigend in den generatorischen Betrieb gesteuert, bis das Moment über der Schaltmuffe 21 des dritten Ganges 20 Null oder negativ wird und die Schaltmuffe 21 freilaufbedingt öffnet. Dann wird das Moment 48 mit steiler Rampe weiter erhöht, bis ein solches Kupplungsreibmoment erreicht ist, das die Kontinuität des Zugkraftverlaufs gewährleistet.

Es folgt dann der Abschluß des Schaltvorganges:

Wird die Drehzahldifferenz über der Schaltmuffe 30 der zweiten Welle 14 kleiner als ein vorbestimmter Schwellwert, dann wird die Schaltmuffe 30 der zweiten Welle 14 eingelegt. Anschließend wird das motorische Moment 48 der Elektromaschine abgesenkt. Gegebenenfalls erfolgt die Absenkung bis in den generatorischen Bereich zum Laden einer Batterie.

Bei vorhandenem Motormanagement kann zusätzlich während des Drehzahlanpassens das Motormoment 38 abgesenkt werden, so daß das Antriebsmoment 42, das sich aus den Gangmomenten 40 des dritten und vierten Ganges 20 und 22 zusammensetzt, auf einen Wert gestellt wird, der dem über ein Gaspedal angeforderten Moment entspricht. Das Antriebsmoment sollte jedoch vorzugsweise zwischen dem Wert vor und nach dem Schaltvorgang liegen.

Abhängig von Kapazität und Ladezustand der Batterie kann die Elektromaschine zur Gestaltung des Zugkraftverlaufes herangezogen werden. Beispielsweise zum Bremsen oder zur kurzzeitigen Erhöhung der Beschleunigung durch extremes Auslenken des Gaspedals (Kickdown).

### BEZUGSZEICHENLISTE

- 10: Zahnräderwechselgetriebe
- 12: erste Getriebeeingangswelle
- 13: fünfter Gang
- 14: zweite Getriebeeingangswelle
- 15: Schaltmuffe der fünften Gangstufe
- 16: erste Gangstufe
- 17: Schaltmuffe der ersten Gangstufe
- 18: zweite Gangstufe
- 19: Schaltmuffe der zweiten Gangstufe
- 20: dritte Gangstufe
- 21: Schaltmuffe der dritten Gangstufe
- 22: vierte Gangstufe
- 23: Schaltmuffe der vierten Gangstufe
- 24: Zusatzantrieb
- 26: Antriebsmotor
- 28: Schaltmuffe der ersten Getriebeeingangswelle
- 30: Schaltmuffe der zweiten Getriebeeingangswelle
- 32: Schaltkupplung
- 34: Planetengetrieb
- 36: Vorgelegewelle
- 38: Motordrehmoment
- 40: Drehmoment über jeweilige Gangstufe
- 42: Antriebsdrehmoment
- 44: Antriebsachse
- 46: Schwungrad
- 48: Moment des Zusatzantriebes

## Patentansprüche

1. Getriebeanordnung, insbesondere für ein Kraftfahrzeug, mit einem Zahnräderwechselgetriebe (10) und wenigstens zwei Getriebeeingangswellen (12,14), denen unterschiedliche Gangstufen (16,18,20,22) zugeordnet sind,
**dadurch gekennzeichnet, daß**
wenigstens die zwei obengenannte Getriebeeingangswellen (12,14) über einen Zusatzantrieb (24) miteinander verbunden sind.

2. Getriebeanordnung nach Anspruch 1,
**dadurch gekennzeichnet, daß**
ein Antriebsmotor (26) über Schaltmuffen (28,30) einer Schaltkupplung (32) mit einer oder beiden Getriebeeingangswellen (12,14) wahlweise verbindbar ist.

3. Getriebeanordnung nach wenigstens einem der vorstehenden Ansprüche,
**dadurch gekennzeichnet, daß**
wenigstens zwei Getriebeeingangswellen (12,14) über ein Planetengetriebe (34) mit dem Zusatzantrieb (24) verbunden sind.

4. Getriebeanordnung nach wenigstens einem der vorstehenden Ansprüche,
**dadurch gekennzeichnet, daß**
der Zusatzantrieb (24) ein Elektromotor oder ein Hydromotor ist.

5. Getriebeanordnung nach wenigstens einem der vorstehenden Ansprüche,
**dadurch gekennzeichnet, daß**
einer Getriebeeingangswelle (14) die geraden und der anderen Getriebeeingangswelle (12) die ungeraden Gangstufen zugeordnet sind.

6. Getriebeanordnung nach wenigstens einem der vorstehenden Ansprüche,
**dadurch gekennzeichnet, daß**
an den Getriebeeingangswellen (12,14) und einer Vorgelegewelle (36) Mittel zur Bestimmung einer Drehzahl und/oder Differenzdrehzahl angeordnet sind, welche entsprechende Signale an eine Steuereinrichtung geben.

7. Verfahren zur Steuerung einer Getriebeanordnung gemäß wenigstens einem der vorstehenden Ansprüche, wobei eine erste Gangstufe einer ersten Getriebeeingangswelle eingelegt ist und eine zweite Gangstufe einer zweiten Getriebeeinganswelle eingelegt werden soll,
**gekennzeichnet durch** folgende Schritte,
(a) Erhöhen des Momentes des Zusatzantriebes in einen motorischen Betrieb, bis ein Moment an der zweiten Getriebeeingangswelle antriebsseitig zu Null oder negativ wird und eine antriebsseitige Verbindung der zweiten Getriebeeingangswelle freilaufbedingt öffnet,
(b) Beaufschlagen der zweiten Getriebeeingangswelle mit einem Moment mittels des Zusatzantriebs, wobei die Drehzahl der zweiten Getriebeeingangswelle so lange verändert wird, bis an einer Schaltmuffe der zweiten Gangstufe Synchronlauf hergestellt wird,
(c) Einlegen der zweiten Gangstufe,
(d) Antreiben bzw. Abbremsen mittels des Zusatzantriebes, bis an einer Schaltmuffe der ersten Gangstufe das Moment zu Null oder negativ wird und diese Schaltmuffe freilaufbedingt öffnet,
(e) Erhöhen bzw. Erniedrigen des Momentes des Zusatzantriebes, bis ein Wert erreicht, bei dem ein kontinuierlicher Zugkraftverlauf möglich ist,
(f) Herstellen einer antriebsseitigen Verbindung der zweiten Getriebeeingangswelle, wenn eine Drehzahldifferenz an dieser Verbindung einen vorbestimmten Schwellwert unterschreitet.

8. Verfahren nach Anspruch 7,
**gekennzeichnet durch** folgenden zusätzlichen Schritt,
(g) Absenken des Momentes des Zusatzantriebes.

9. Verfahren nach Anspruch 7 oder 8,
**dadurch gekennzeichnet, daß**
zwischen den Schritten (c) und (d) der Zusatzantrieb derart gesteuert wird, daß sich ein Antriebsmoment ergibt, welches zwischen den Werten der beteiligten Gangstufen liegt.

10. Verfahren nach wenigstens einem der Ansprüche 7 bis 9,
**dadurch gekennzeichnet, daß**
Schritt (b) bei kleinem antreibenden oder abbremsenden Moment des Zusatzantriebes erfolgt.

11. Verfahren nach wenigstens einem der Ansprüche 8 bis 10,
**dadurch gekennzeichnet, daß**
Schritt (g) solange erfolgt, bis der Zusatzantrieb generatorisch zum Laden einer Batterie wirkt.

## Claims

1. Transmission arrangement, in particular for a motor vehicle, with a gearwheel change transmission (10) and with at least two transmission input shafts (12, 14) which are assigned different gear steps (16, 18, 20, 22), **characterized in that** at least the two abovementioned transmission input shafts (12, 14) are connected to one another via an additional drive (24).

2. Transmission arrangement according to Claim 1, **characterized in that** an engine (26) can be selectively connected to one or both transmission input shafts (12, 14) via shift sleeves (28, 30) of a shift clutch (32).

3. Transmission arrangement according to at least one of the preceding claims, **characterized in that** at least two transmission input shafts (12, 14) are connected to the additional drive (24) via an epicyclic transmission (34).

4. Transmission arrangement according to at least one of the preceding claims, **characterized in that** the additional drive (24) is an electric motor or a hydraulic motor.

5. Transmission arrangement according to at least one of the preceding claims, **characterized in that** one transmission input shaft (14) is assigned the even gear steps and the other transmission input shaft (12) is assigned the odd gear steps.

6. Transmission arrangement according to at least one of the preceding claims, **characterized in that** means for determining a rotational speed and/or a differential rotational speed, which transmit corresponding signals to a control device, are arranged on the transmission input shafts (12, 14) and a countershaft (36).

7. Method for controlling a transmission arrangement according to at least one of the preceding claims, a first gear step of a first transmission input shaft being selected and a second gear step of a second transmission input shaft being selected, **characterized by** the following steps,
(a) increase of the torque of the additional drive in a motor operating mode, until a torque on the second transmission input shaft becomes zero or negative on the drive side and, as a consequence of freewheeling, opens a drive-side connection of the second transmission input shaft,
(b) action upon the second transmission input shaft with a torque by means of the additional drive, the rotational speed of the second transmission input shaft being modified until synchronism is obtained at a shift sleeve of the second gear step,
(c) selection of the second gear step,
(d) driving or braking by means of the additional drive, until the torque becomes zero or negative at a shift sleeve of the first gear step and, as a consequence of freewheeling, opens this shift sleeve,
(e) increase or decrease of the torque of the additional drive, until a value at which a continuous traction profile is possible is reached,
(f) execution of a drive-side connection of the second transmission input shaft when a rotational speed difference at this connection undershoots a predetermined threshold value.

8. Method according to Claim 7, **characterized by** the following additional step,
(g) reduction of the torque of the additional drive.

9. Method according to Claim 7 or 8, **characterized in that**, between steps (c) and (d), the additional drive is controlled in such a way that a drive torque lying between the values of the gear steps involved is obtained.

10. Method according to at least one of Claims 7 to 9, **characterized in that** step (b) takes place with a low driving or braking torque of the additional drive.

11. Method according to at least one of Claims 8 to 10, **characterized in that** step (g) takes place until the additional drive acts as a generator for charging a battery.

## Revendications

1. Transmission, en particulier pour un véhicule automobile, comprenant une boîte de vitesses à engrenages (10) et au moins deux arbres d'entrée de boîte de vitesses (12, 14), auxquels sont affectés des rapports de transmission différents (16, 18, 20, 22),
**caractérisée en ce que**
au moins les deux arbres d'entrée de boîte de vitesses susmentionnés (12, 14) sont connectés l'un à l'autre par le biais d'un entraînement supplémentaire (24).

2. Transmission selon la revendication 1,
**caractérisée en ce qu'**un moteur d'entraînement (26) peut être connecté au choix par le biais de manchons de commande (28, 30) d'un embrayage (32) à un ou aux deux arbres d'entrée de boîte de vitesses (12, 14).

3. Transmission selon au moins l'une des revendications précédentes,
**caractérisée en ce que**
au moins deux arbres d'entrée de boîte de vitesses (12, 14) sont connectés par le biais d'un engrenage planétaire (34) à l'entraînement supplémentaire (24).

4. Transmission selon au moins l'une des revendications précédentes,
**caractérisée en ce que**
l'entraînement supplémentaire (24) est un moteur électrique ou hydraulique.

5. Transmission selon au moins l'une des revendications précédentes,
**caractérisée en ce que**
les rapports de transmission pairs sont associés à un arbre d'entrée de boîte de vitesses (14) et les rapports de transmission impairs sont associés à l'autre arbre d'entrée de boîte de vitesses (12).

6. Transmission selon au moins l'une des revendications précédentes,
**caractérisée en ce que**
l'on prévoit sur les arbres d'entrée de boîte de vitesses (12, 14) et un arbre intermédiaire (36) des moyens pour déterminer une vitesse de rotation et/ou une vitesse de rotation différencielle, lesquels fournissent des signaux correspondants à un dispositif de commande.

7. Procédé de commande d'une transmission selon au moins l'une des revendications précédentes, dans lequel un premier rapport de transmission d'un premier arbre d'entrée de boîte de vitesses est enclenché et un deuxième rapport de transmission d'un deuxième arbre d'entrée de boîte de vitesses doit être enclenché,
**caractérisé par** les étapes suivantes
(a) augmentation du couple de l'entraînement supplémentaire jusqu'en mode moteur, jusqu'à ce qu'un couple au niveau du deuxième arbre d'entrée de boîte de vitesses devienne nul ou négatif du côté de l'entraînement et qu'une connexion, du côté de l'entraînement, du deuxième arbre d'entrée de boîte de vitesses s'ouvre du fait de la roue libre,
(b) sollicitation du deuxième arbre d'entrée de boîte de vitesses avec un couple au moyen de l'entraînement supplémentaire, la vitesse de rotation du deuxième arbre d'entrée de boîte de vitesses étant modifiée jusqu'à ce qu'un fonctionnement synchrone soit réalisé au niveau d'un manchon de commande du deuxième rapport de transmission,
(c) enclenchement du deuxième rapport de transmission,
(d) entraînement ou freinage au moyen de l'entraînement supplémentaire, jusqu'à ce que le couple au niveau d'un manchon de commande du premier rapport de transmission devienne nul ou négatif et que ce manchon de commande s'ouvre du fait de la roue libre,
(e) augmentation ou réduction du couple de l'entraînement supplémentaire jusqu'à ce qu'on atteigne une valeur qui permette une allure de la force de traction continue,
(f) création d'une connexion du côté de l'entraînement du deuxième arbre d'entrée de boîte de vitesses lorsqu'une différence de vitesse de rotation au niveau de cette connexion est inférieure à une valeur seuil prédéterminée.

8. Procédé selon la revendication 7,
**caractérisé par** l'étape supplémentaire suivante :
(g) abaissement du couple de l'entraînement supplémentaire.

9. Procédé selon la revendication 7 ou 8.
**caractérisé en ce que**
l'entraînement supplémentaire est commandé de telle sorte entre les étapes (c) et (d), qu'il en résulte un couple d'entraînement qui se trouve entre les valeurs des rapports de transmission concernés.

10. Procédé selon au moins l'une des revendications 7 à 9,
**caractérisé en ce que**
l'étape (b) s'effectue à un petit couple d'entraînement ou de freinage de l'entraînement supplémentaire.

11. Procédé selon au moins l'une des revendications 8 à 10,
**caractérisé en ce que**
l'étape (g) s'effectue tant que l'entraînement supplémentaire fonctionne comme un générateur pour charger une batterie.
